# EUROPEAN PATENT APPLICATION

(11) **EP 1 067 492 A2**
(43) Date of publication of application: **10.01.2001**
(21) Application number: 00305196.8
(22) Date of filing: 20.06.2000
(51) Int. Cl.: G07F 19/00, G06F 17/60, G07F 7/08

(54) **Transaction notification system and method**

(30) Priority: 30.06.1999 US 343813
(71) Applicant: LUCENT TECHNOLOGIES INC., Murray Hill, New Jersey 07974-0636 (US)
(72) Inventor: Palmquist, John Mark, Lilburn, Georgia 30247 (US)
(74) Representative: Watts, Christopher Malcolm Kelway, Dr.

(57) **Abstract**

A transaction notification system provides a transaction notification service for enabling early detection and prevention of consumer account fraud by providing a notification message to a subscriber of the service when a subscriber's account is used. Architecturally, an automated configuration of the transaction notification system includes one or more transaction devices to be monitored, a transaction processing center computer associated with a transaction processing center, and one or more transaction notification devices that are used to notify the subscriber. The transaction device 11 can be, for example, but not limited to, any of the following: a credit card point-of-sale (POS) device, a cellular telephone, an automated teller machine (ATM), a stockbroker computer, a shipment order computer, a utility company computer, a bank computer, a medical insurance company computer, *etc.* The subscriber notification device 15 can be, for example, but not limited to, any of the following: a computer having an electronic mail (e-mail) software program (e-mail computer), a pager, a facsimile machine, a computer maintaining a website on the World Wide Web (WWW) associated with the well known Internet (website computer), *etc.* The subscriber provides subscription information identifying the transaction device(s) to be monitored for usage and identifying a subscriber notification device(s) to be notified when the transaction device is used. In operation, a notification message is communicated to the subscriber notification device by the computer when the transaction device has been used, and the computer produces a bill that is sent to the subscriber for the transaction notification service.

## Description

### Field Of Invention

The present invention generally relates to data communications and fraud detection apparatus, and more particularly, to a transaction notification system and method for implementing a transaction notification service involving communication of a notification message to a subscriber when a transaction device is utilized for early detection and prevention of fraud.

### Background Of The Invention

Fraud involving consumer accounts is an ever increasing problem in our society today. A nonexhaustive list of such consumer accounts include those for credit cards, cellular telephones, automated teller machines (ATM), stockbrokers, shipment orders, utility companies, banks, medical insurance companies, *etc*. In the context of this document, a "consumer account" means any account associated or identified with a party to be billed for a good and/or service that accumulates a billing amount based upon sale of the good and/or service.

As a specific example of common fraud in the context of credit cards, thieves often steal credit cards from consumers and run up enormous bills for consumers by fraudulently making credit card purchases, at the expense and aggravation of the consumers and the credit card companies. As another specific example, in the context of cellular telephone fraud, thieves steal cellular telephone identification numbers (particularly, the mobile identification number (MIN) and equipment serial number (ESN) number), sometimes using sophisticated electronic surveillance equipment and software, in order to make "free" cellular telephone calls, at the expense and aggravation of consumers and cellular telephone companies. Moreover, even if the companies that provide the accounts bear the greater part of the risk by limiting the liability of account holders for such fraud, society as a whole still ultimately pays for the fraud, as these companies typically pass on the liability to consumers through higher fees for goods and/or services and higher transactional charges for maintaining accounts.

Thus, a need exists in the industry for better ways to detect and prevent fraud involving consumer accounts in order to better protect consumers.

### Summary Of The Invention

The present invention provides a transaction notification system and method for implementing a transaction notification service involving communication of a notification message to a subscriber when a transaction device is utilized for early detection and prevention of consumer account fraud.

Architecturally, the transaction notification system includes one or more transaction devices to be monitored, a transaction processing center for monitoring usage of the transaction devices, and one or more transaction notification devices that are used to notify the subscriber of usage. The transaction device can be, for example, but not limited to, any of the following: a credit card point-of-sale (POS) device, a cellular telephone, an automated teller machine (ATM), a stockbroker computer, a shipment order computer, a utility company computer, a bank computer, a medical insurance company computer, *etc.* The subscriber notification device can be, for example, but not limited to, any of the following: a computer having an electronic mail (e-mail) software program (e-mail computer), a pager, a facsimile machine, a computer maintaining a website on the World Wide Web (WWW) associated with the well known Internet (website computer), *etc.* The subscriber provides subscription information to the center identifying the transaction device(s) to be monitored for usage and identifying a subscriber notification device(s) to be notified when the transaction device is used. Further note that the transaction processing center of the transaction notification system can be implemented manually via human implementation or automatically via some form of automated means, such as via one or more computers that a programmed to operate automatically to achieve the goals of the present invention. In accordance with the transaction notification system, a notification message is communicated to the prescribed subscriber notification device(s) by the transaction processing center (initiated by a person or computer) when (immediately or at a later time) the prescribed transaction device(s) has been used, and the center produces a bill that is sent to the subscriber of the transaction notification service.

The present invention can also be conceptualized as providing several methods for implementing a transaction notification service. In this regard, one of these methods can be broadly summarized by the following steps: receiving subscription information from a subscriber identifying a transaction device to be monitored for usage and identifying a subscriber notification device to be notified when the transaction device is used; and communicating a notification message to the subscriber notification device when the transaction device has been used. Another method utilizes the foregoing steps plus the step of billing the subscriber for the service based upon, for example, the number of messages communicated to the subscriber notification device, the number of usages detected, or a fixed period of time (*e.g*., daily, weekly, monthly).

Other features, advantages, and variations of the present invention will become apparent to one with skill in the art upon examination of the following drawings and detailed description.

### Brief Description Of The Drawings

The invention can be better understood with reference to the following drawings. The components in the drawings are not necessarily to scale, emphasis instead being placed upon clearly illustrating the principles of the present invention. Moreover, in the drawings, like reference numerals designate corresponding parts throughout the several views.
FIG. 1 is a block diagram illustrating the transaction notification system and method of the present invention;
FIG. 2 is a block diagram of a transaction processing center computer of the transaction processing center of FIG. 1;
FIG. 3 is a flow chart illustrating the architecture, functionality and operation of the transaction processing center computer of FIG. 2;
FIG. 4 is a block diagram of the transaction notification system of FIG. 1 in the context of its use in connection with a credit card account;
FIG. 5 is a block diagram of the transaction notification system of FIG. 1 in the context of its use in connection with an ATM account; and
FIG. 6 is a block diagram of the transaction notification system of FIG. 1 in the context of its use in connection with a cellular telephone account.

### Detailed Description Of The Preferred Embodiments

The transaction notification system of the present invention can be used in many different consumer account contexts and can be configured to communicate messages to a subscriber using any (or a combination concurrently) of various different communication devices, both of which will be fully described in detail hereinafter. Generally, the transaction notification system can be viewed as providing a new method of doing business for those companies that provide consumer accounts or for telephone companies that wish to provide another service to its customers. Such companies can offer a transaction notification service to subscribers for a prescribed fee and bill the subscribers accordingly. As a result of the transaction notification system (in either a manual of automated configuration), a subscriber to the transaction notification service is able to monitor usage of the transaction device in a timely manner by receiving notification messages with a subscriber notification device(s), is able to promptly detect when fraud is being perpetrated on the subscriber's account associated with the transaction device, and is able to quickly prevent future fraud on the relevant account.

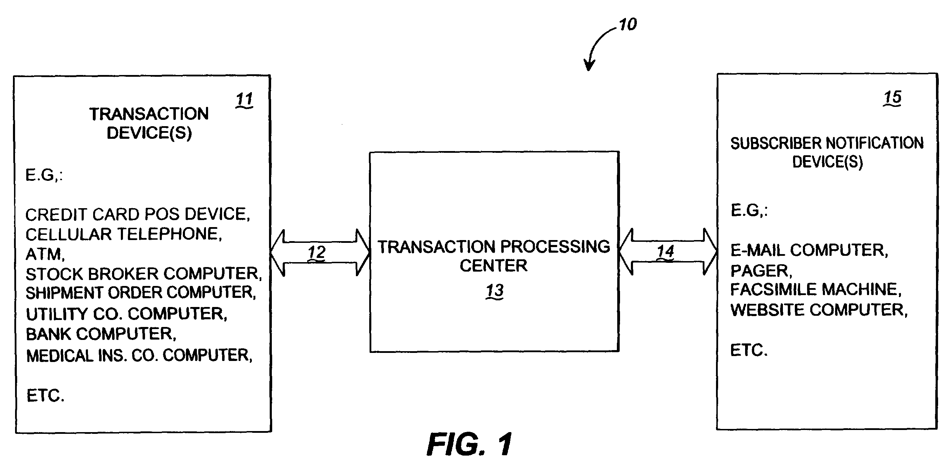

FIG. 1 is a block diagram illustrating the transaction notification system (as well as its associated methodology) of the present invention, the system being generally denoted by reference numeral 10. In architecture, with reference to FIG. 1, the transaction notification system 10 includes a transaction device 11, a transaction processing center 13 that communicates with the transaction device 11 as indicated by reference arrow 12, and a subscriber notification device 15 that communicates with the transaction processing center 13 as indicated by reference arrow 14. The transaction device 11 can be, for example, but not limited to, any of the following: a credit card point-of-sale (POS) device, a cellular telephone, an automated teller machine (ATM), a stockbroker computer, a shipment order computer, a utility company computer, a bank computer, a medical insurance company computer, a credit account computer, *etc.* The subscriber notification device 15 can be, for example, but not limited to, any of the following: a computer having an electronic mail (e-mail) software program (e-mail computer), a pager, a facsimile machine, a computer maintaining a website on the World Wide Web (WWW) associated with the well known Internet (website computer), *etc.*

The transaction processing center 13 of the transaction notification system 10 can be implemented manually via human implementation or automatically via some form of automated means. More specifically, relative to a manual implementation, a person situated at the transaction processing center 13 could monitor usage of the transaction device(s) 11 (which are configured to notify the center 13 when the device(s) 11 is utilized) and could initiate communications to the subscriber notification device 15, for example, via sending an e-mail message with a computer associated with the center 13 or a facsimile message with a facsimile machine associated with the center 13. Furthermore, the subscriber can be billed by the transaction processing center 13 based upon, for example, the number of messages communicated to the subscriber notification device 15, the number of usages detected, or a fixed period of time (*e.g*., daily, weekly, monthly). The bills can be manually produced or produced with the assistance of one or more computers.

With respect to an automated configuration, the transaction processing center can utilize hardware, software, firmware, or a combination thereof to implement the requisite functionality. In the preferred embodiments, the transaction processing center 13 is implemented in an automated configuration and utilizes software that is stored in a memory and that is executed by a suitable instruction execution system, preferably by one or more computers.

In operation in an automated configuration, the transaction processing center 13 automatically monitors (continuously or periodically) the appropriate transaction device(s) 11 for usage. At the time of usage of the transaction device(s) 11 or at a later time, the transaction processing center 13 communicates a notification message to the appropriate subscriber notification device(s) 15 in order to ultimately advise the subscriber to the transaction notification service of the usage of the transaction device(s) 11. The transaction processing center 13 can be configured to notify the subscriber notification device(s) 15 upon the occurrence of each usage of the transaction device(s) 11 or after a predefined number of usages have been accumulated.

Furthermore, the subscriber can be automatically billed by the transaction processing center 13 based upon data files and records maintained by the center 13. The data files and records can define, for example, the number of messages communicated to the subscriber notification device 15 and/or the number of usages detected. Bills can be automatically generated based upon, for example, the number of messages communicated to the subscriber notification device 15, the number of usages detected, or a fixed period of time (*e.g.*, daily, weekly, monthly).

As a result of the transaction notification system 10 (in either the manual of automated configuration), the subscriber is able to monitor usage of the transaction device 11 in a timely manner, is able to promptly detect when fraud is being perpetrated on the subscriber's account associated with the transaction device 11, and is able to quickly prevent future fraud on the relevant account.

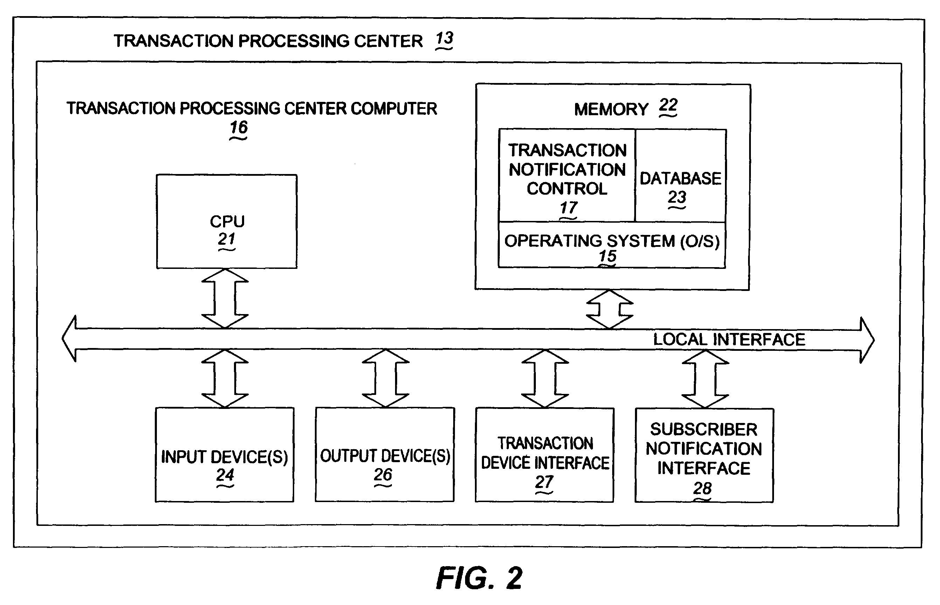

FIG. 2 is a block diagram of a possible implementation of a transaction processing center computer 16 associated with the center 13 (FIG. 1) for achieving fully automated operation of the transaction notification system 10 (FIG. 1). In the preferred embodiment, the transaction processing center computer 16 is a general purpose computer, such as a commercially available workstation. As shown in FIG. 2, in architecture, the transaction processing center computer 16 includes a central processing unit (CPU) 21, a memory 22 (*e.g.*, volatile and/or nonvolatile memory, random access memory (RAM), read only memory (ROM), *etc.*) configured to store a conventional operating system (O/S) 15 and a transaction notification control 17 (in the form of application software) for implementing the functionality of the present invention, one or more input devices 24 (*e.g*., a keyboard, a mouse, a trackball, *etc.*), one or more output devices 26 (*e.g.*, display, printer, *etc.*), a transaction device interface 27 (*e.g.*, a modem), and subscriber notification device interface 28 (*e.g.*, a modem, facsimile machine, *etc.*), and a local interface 29 (*e.g.*, one or more buses) that electrically interconnects the foregoing apparatus/systems and enables electrical intercommunication among same. As shown within memory 22, the transaction notification control 22 maintains at least the following data, preferably in a suitable software database: account records, subscriber records, transaction records, and bill records.

In operation, the O/S 15 and the transaction notification control 17 are executed by the CPU 21 in order to control the computer 16 and to accomplish the goals of the present invention. The transaction notification control 17 can be configured via the one or more input devices 24 and can provide data to the one or more output devices 26. The transaction notification control 17 monitors usage of the transaction device 11 (FIG. 1) via the transaction device interface 27 and initiates communications to the subscriber notification device 15 via the subscriber notification device interface 28. The transaction notification control 17 can be configured to, automatically or in response to an appropriate queue, generate a bill for a subscriber via the one or more output devices 26. In an alternative embodiment, the transaction processing center computer 16 can communicate billing information to another computer, which produces a bill for the subscriber of the service.

The transaction notification control 17, which comprises an ordered listing of executable instructions for implementing logical functions, can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can contain, store, communicate, propagate, or transport the program for use by or in connection with the instruction execution system, apparatus, or device. The computer readable medium can be, for example but not limited to, an electronic, magnetic, optical, electromagnetic, infrared, or semiconductor system, apparatus, device, or propagation medium. More specific examples (a nonexhaustive list) of the computer-readable medium would include the following: an electrical connection (electronic) having one or more wires, a portable computer diskette (magnetic), a random access memory (RAM) (magnetic), a read-only memory (ROM) (magnetic), an erasable programmable read-only memory (EPROM or Flash memory) (magnetic), an optical fiber (optical), and a portable compact disc read-only memory (CDROM) (optical). Note that the computer-readable medium could even be paper or another suitable medium upon which the program is printed, as the program can be electronically captured, via for instance optical scanning of the paper or other medium, then compiled, interpreted or otherwise processed in a suitable manner if necessary, and then stored in a computer memory.

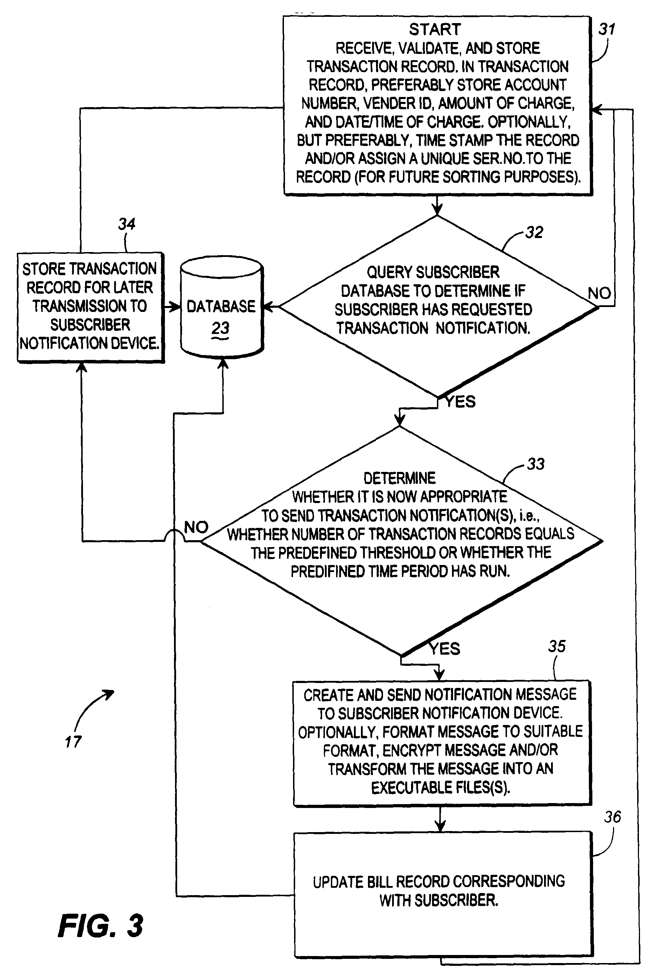

FIG. 3 is a flow chart that illustrates the architecture, functionality, and operation of a possible implementation of the transaction notification control 17 (FIG. 2). In this regard, each block of the flow chart represents a module, segment, or portion of code, which comprises one or more executable instructions for implementing the specified logical function(s). It should also be noted that in some envisioned alternative implementations, the functions noted in the blocks may occur out of the order noted in FIG. 3. For example, it is possible that the software could be implemented so that two blocks shown in succession in FIG. 3 may in fact be executed substantially concurrently or the blocks may sometimes be executed in the reverse order, depending upon the functionality involved.

Referring to FIG. 3, the transaction notification control 17 is configured to receive, validate, and store a transaction record indicative of usage of the transaction device 11 (FIG. 1). Preferably, the transaction record stores an account number, vender identification (ID), and amount of charge to the account number, and date (perhaps including time) information associated with a charge. Optionally, but preferably, the transaction record is time stamped and assigned a unique serial number. The time stamp can be used for tracking, validating, and sorting purposes. The serial numbers can be used for sorting purposes.

Next, as indicated in block 32, the transaction notification control 17 queries the database 23 in order to determine if the subscriber has requested the transaction notification service. If not, then the transaction notification control 17 reverts back to block 31. Otherwise, in the case when the subscriber has requested a service, process flow transfers to block 33.

As denoted at block 33, the transaction notification control 17 determines whether it is now appropriate to send a transaction notification to the subscriber notification device 15 (FIG. 1). The control 17 makes this determination based upon whether the number of transaction records equals a predefined threshold or whether a predefined time period has run, which parameters are set by the subscriber or administrator of the center 13. As mentioned, the foregoing parameters are input to the transaction notification control 17 via the one or more input devices 24 (FIG. 2). If it is not time to send a transaction notification, then the transaction record is stored for later transmission to the subscriber notification device 15, as indicated at block 34, and process flow reverts back to block 31. In the case where it is time to send a transaction notification to the subscriber notification device 15, process flow reverts to block 35.

As indicated in block 35, the transaction notification control 17 creates and sends a suitable notification message to the appropriate subscriber notification device 15. The message may be formatted to any suitable format, encrypted, and/or transformed into an executable file(s), if desired. Many format, encryption techniques, and techniques for creating executable files are well known in the art and are not described herein for simplicity.

Finally, as denoted at block 36, the transaction notification control 17 updates the bill record corresponding with the subscriber so that the subscriber can be accurately and appropriately billed for the transaction notification service, and process flow reverts to block 31.

### First Preferred Embodiment

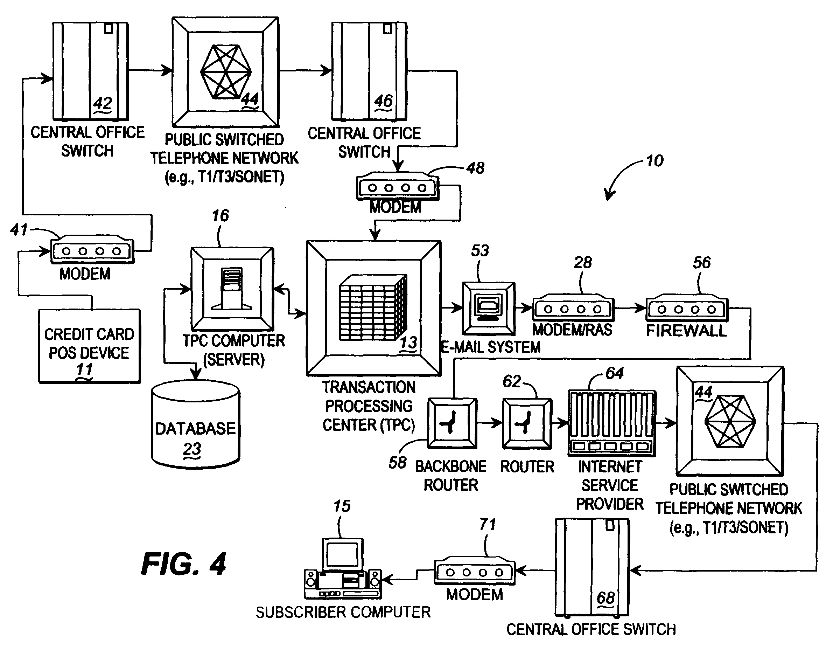

FIG. 4 is a block diagram of the first preferred embodiment 10' of the present invention wherein the transaction notification system 10 (FIG. 1) is used in connection with a credit card account. In this context, as shown in FIG. 4, the transaction device 11, is a credit card point-of-sale (POS) device, which is monitored by the transaction processing center computer 16.

When a credit card transaction occurs in a business establishment or otherwise, the credit card number is input into the POS device 11, typically manually via a keypad or automatically via swiping a magnetic stripe associated with the credit card by a magnetic stripe reader associated with the device 11. In conventional POS devices 11, this causes a modem 41 associated with the POS device 11 to initiate a communication link with a central office (CO) switch 42, which is well known in the art of telephony. The CO switch 42 is typically located at a telephone company facility, oftentimes referred to as a central office or CO. The CO switch 42 controls communications to/from a public switch telephone network (PSTN) 44, which is also well known in the art.

Another central office switch 46 located at another telephone company facility is also connected with the PSTN 44 and receives and controls the receipt of data from the formerly mentioned CO switch 42.

The switch 46 communicates with the transaction processing center computer 16 via a modem 48 associated with the switch 46 and a modem (not shown; see element 27 in FIG. 2) associated with the transaction processing center computer 16.

As shown, the transaction processing center computer 16 maintains and is able to access the database 23 for, among other things, account, subscriber, transaction, and billing information. Any suitable file structure may be utilized in the database 23.

In this specific first preferred embodiment 10', the transaction processing center computer 16 includes an e-mail system 53 (in software in memory 22 of FIG. 2) or has access to one associated with an interconnected computer, which communicates to a suitable internet service provider 64 by way of modem 28', firewall 56, backbone router 58, and router 62, all of the foregoing of which are well known in the art. The e-mail system 53 can be, for example, Microsoft Outlook or Eudora, which are commercially available e-mail programs. In general, the firewall 56 puts up a barrier that controls the flow of traffic between networks, and the routers 58, 62 are internetworking devices, They allow each interconnected network to retain their subnetwork address, broadcast characteristics, and so on, but each network can still communicate through the router connections with other networks.

The internet service provider (ISP) 64 communicates with a CO switch 68 via the PSTN 44. The switch 68 communicates to a subscriber computer 15, for example, a PC, by way of a modem 71, which is associated with the subscriber computer 15. The subscriber computer 15 includes an e-mail system 73, for example, Microsoft Outlook or Eudora, which are commercially available programs and which can be accessed by the subscriber for receiving transaction notifications and, if desired, bills for the transaction notification service.

Thus, as is clear from FIG. 4 and the aforementioned discussion, the transaction notification system 10 (FIG. 1) can be easily implemented in connection with a credit card account to fight fraud.

### Second Preferred Embodiment

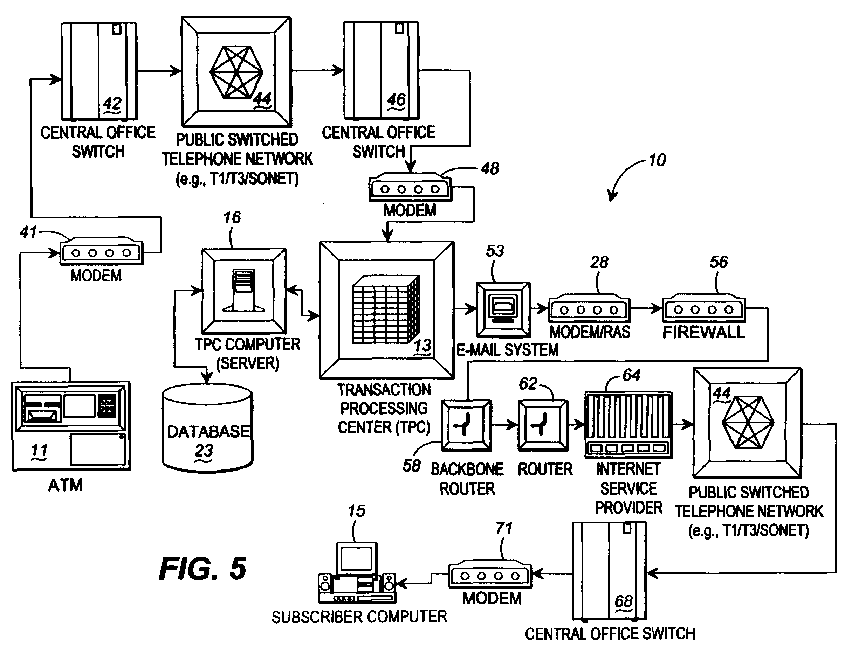

A second preferred embodiment 10'' of the transaction notification system 10 (FIG. 1) is shown in FIG. 5. In this context, the transaction notification system 10 is used in connection with an ATM account.

When an ATM transaction occurs, an ATM number is input into the ATM 11, typically via swiping a magnetic stripe associated with the ATM card by a magnetic stripe reader associated with the ATM 11. In conventional ATM 11, this causes a modem 41 associated with the ATM 11 to initiate a communication link with a central office (CO) switch 42. The CO switch 42 controls communications to/from a public switch telephone network (PSTN) 44.

Another central office switch 46 located at another telephone company facility is also connected with the PSTN 44 and receives data from the former CO switch 42.

The switch 46 communicates with the transaction processing center computer 16 via a modem 48 associated with the switch 46 and a modem (not shown; see element 27 in FIG. 2) associated with the transaction processing center computer 16.

As shown, the transaction processing center computer 16 maintains and is able to access the database 23 for, among other things, account, subscriber, transaction, and billing information. Any suitable file structure may be utilized in the database 23.

In this specific second preferred embodiment 10'', the transaction processing center computer 16 includes an e-mail system 53 (in memory 22 of FIG. 2) or has access to one associated with an interconnected computer, which communicates to a suitable internet service provider 64 by way of modem 28', firewall 56, backbone router 58, and router 62.

The ISP 64 communicates with a CO switch 68 via the PSTN 44. The switch 68 communicates to a subscriber computer 15, for example, a PC, by way of a modem 71, which is associated with the subscriber computer 15. The subscriber computer 15 includes an e-mail system 73, for example, Microsoft Outlook or Eudora, that can be accessed by the subscriber for receiving transaction notifications and, if desired, bills for the transaction notification service.

Therefore, as is clear from FIG. 5 and the aforementioned discussion, the transaction notification system 10 (FIG. 1) can be easily implemented in connection with an ATM account to fight fraud.

### Third Preferred Embodiment

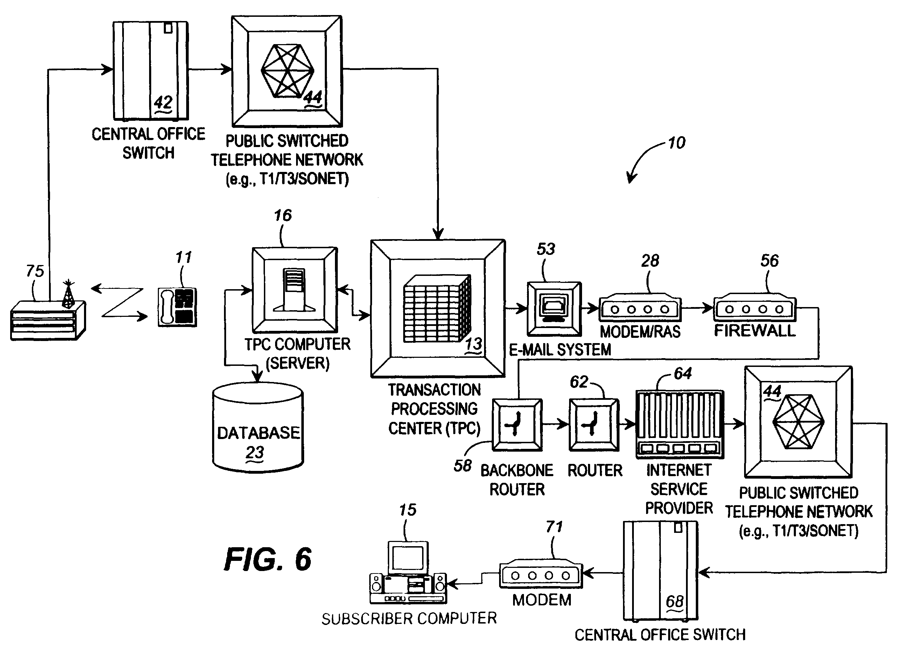

A third preferred embodiment 10''' of the transaction notification system 10 (FIG. 1) is shown in FIG. 6. In this third preferred embodiment, the transaction notification system 10 is used in connection with a cellular telephone account.

When a cellular telephone transaction occurs, the MIN and ESN numbers are automatically communicated from the cellular telephone 11 to the cellular station 75. In turn, the cellular station 75 establishes a communication link with a central office (CO) switch 42. The CO switch 42 controls communications to/from a public switch telephone network (PSTN) 44.

The switch 42 communicates with the transaction processing center computer 16 via the PSTN 44 and a modem (not shown; see element 27 in FIG. 2) associated with the transaction processing center computer 16.

As shown, the transaction processing center computer 16 maintains and is able to access the database 23 for, among other things, account, subscriber, transaction, and billing information. Any suitable file structure may be utilized in the database 23.

In this specific third preferred embodiment 10''', the transaction processing center computer 16 includes an e-mail system 53 (in memory 22 of FIG. 2) or has access to one associated with an interconnected computer, which communicates to a suitable internet service provider 64 by way of modern 28', firewall 56, backbone router 58, and router 62.

The ISP 64 communicates with a CO switch 68 via the PSTN 44. The switch 68 communicates to a subscriber computer 15, for example, a PC, by way of a modem 71, which is associated with the subscriber computer 15. The subscriber computer 15 includes an e-mail system 73, for example, Microsoft Outlook or Eudora, that can be accessed by the subscriber for receiving transaction notifications and, if desired, bills for the transaction notification service.

Hence, as is clear from FIG. 6 and the aforementioned discussion, the transaction notification system 10 (FIG. 1) can be easily implemented in connection with a cellular telephone account to fight fraud.

### Other Embodiments

The transaction notification system 10 (and its associated methodologies) can be applied to many other types of accounts and can be configured to provide notifications to the subscriber via means other than e-mail transmissions. A few of these are briefly mentioned hereafter, as examples, and a detailed discussion is not set forth herein for simplicity. However, it will be apparent to one with skill in the art how to readily implement the transaction notification system 10 in these contexts as well as others that are not specifically mentioned.

The system 10 can be implemented in connection with a stockbroker account. In accordance with the system 10, a subscriber is notified when a stock trade takes place.

The system 10 can be implemented in connection with a shipment order computer. In accordance with the system 10, a subscriber is notified when an order has been placed and charged to an account.

The system 10 can be implemented in connection with a utility company computer, for example, an electric company, water company, *etc.* In accordance with the system 10, a subscriber is notified when a utility, such as electricity or water, is being used or charged to the account.

The system 10 can be implemented in connection with a bank computer. In accordance with the system 10, a subscriber is notified when a bank account is accessed to withdraw, deposit money, transfer funds, or otherwise utilize the account.

The system 10 can be implemented in connection with a medical insurance computer. In accordance with the system 10, a subscriber is notified when a request for payment from a medical insurance company has been made by a party and/or when a payment based upon a policy has been made.

The system 10 can be implemented in connection with a credit account computer, perhaps associated with a retail establishment, such as a lumber company. In accordance with the system 10, a subscriber is notified when a purchase has been made and charged to the credit account.

The system 10 can be implemented to send notification messages to the subscriber in a number of ways, other than via e-mail, for example but not limited to, via a communication to a pager, via a communication to a facsimile machine, by posting the information on a website on the WWW of the Internet for allowing viewing by the subscriber, *etc*.

In concluding this detailed description, it should be emphasized that the above-described embodiments of the present invention, particularly, any "preferred" embodiments (*e.g.*, the first, second, and third preferred embodiments), are merely possible examples of implementations, merely set forth for a clear understanding of the principles of the invention. Many variations and modifications may be made to the above-described embodiment(s) of the invention without departing from the scope of the invention.

## Claims

1. A method for implementing a transaction notification service, comprising the steps of:
receiving subscription information from a subscriber identifying a transaction device to be monitored for usage and identifying a subscriber notification device to be notified when said transaction device is used; and
communicating a notification message to said subscriber notification device when said transaction device has been used.

2. The method of claim 1, wherein said transaction device is a credit card point-of-sale device, a cellular telephone, an automated teller machine, a stock broker computer, or an shipment order computer.

3. The method of claim 1, wherein said subscriber notification device is an e-mail computer, pager, facsimile machine, or website computer.

4. The method of claim 1, further comprising the step of billing said subscriber for communicating each said notification message.

5. The method of claim 1, further comprising the steps of:
monitoring use of said transaction device; and
billing said subscriber for a notification service based upon a period of time.

6. The method of claim 1, wherein said transaction device is a point-of-sale device for processing a credit card transaction, said subscriber notification device is a computer having an e-mail program, and said notification message is an e-mail message.

7. The method of claim 1, wherein said transaction device is a cellular telephone, said subscriber notification device is a computer having an e-mail program, and said notification message is an e-mail message.

8. The method of claim 1, wherein said notification message comprises executable files that are configured, when executed, to update files in said subscriber notification device.

9. The method of claim 1, further comprising the step of encrypting said notification message prior to or during said communicating step.

10. A method for implementing a transaction notification service, comprising the steps of:
receiving subscription information from a subscriber identifying a transaction device to be monitored for usage and identifying a subscriber notification device to be notified when said transaction device is used;
accumulating a plurality of transaction records corresponding with respective usage transactions of said transaction device; and
communicating a notification message to said subscriber notification device, said notification message indicating said transaction records.

11. The method of claim 10, wherein said transaction device is a credit card point-of-sale device, a cellular telephone, an automated teller machine, a stock broker computer, or an shipment order computer.

12. The method of claim 10, wherein said subscriber notification device is an e-mail computer, pager, facsimile machine, or website computer.

13. The method of claim 10, further comprising the step of billing said subscriber for communicating each said notification message.

14. The method of claim 10, further comprising the step of billing said subscriber for a notification service based upon a period of time.

15. The method of claim 10, wherein said transaction device is a point-of-sale device for processing a credit card transaction, said subscriber notification device is a computer having an e-mail program, and said notification message is an e-mail message.

16. The method of claim 10, wherein said transaction device is a cellular telephone, said subscriber notification device is a computer having an e-mail program, and said notification message is an e-mail message.

17. The method of claim 10, wherein said notification message comprises executable files that are configured, when executed, to update files in said subscriber notification device.

18. The method of claim 10, further comprising the step of encrypting said notification message prior to or during said communicating step.

19. The method of claim 10, wherein said subscription information includes a time period, wherein said transaction records are stored over said time period, and wherein said notification message is communicated each said time period.

20. The method of claim 10, wherein said subscription information includes a number of transactions and wherein said notification message is communicated after said number of transactions is accumulated.

21. The method of claim 10, further comprising the step of assigning a respective serial number to each said usage transaction.

22. The method of claim 10, wherein said receiving, accumulating, and communicating steps are performed manually by a person.

23. The method of claim 10, further comprising the steps of
controlling and implementing said receiving, accumulating, and communicating steps with a computer system; and
enabling a person to communicate with said computer system to input said subscription information.

24. The method of claim 10, further comprising the steps of:
implementing said communicating step with a computer system; and
enabling a person to communicate with said computer system to prompt said computer system to perform said communicating step.

25. The method of claim 10, further comprising the step of providing a web site to enable said person to prompt said computer system to perform said communicating step.

26. The method of claim 24, further comprising the step of providing a telephone interface to enable said person to prompt said computer system via a telephone call to perform said communicating step.

27. A system for implementing a transaction notification service, comprising:
means for receiving subscription information from a subscriber identifying a transaction device to be monitored for usage and identifying a subscriber notification device to be notified when said transaction device is used;
means for accumulating a plurality of transaction records corresponding with respective usage transactions of said transaction device; and
means for communicating a notification message to said subscriber notification device, said notification message indicating said transaction records.

28. A computer system for implementing a transaction notification service, comprising a processor programmed to receive subscription information from a subscriber identifying a transaction device to be monitored for usage and identifying a subscriber notification device to be notified when said transaction device is used, accumulate a plurality of transaction records corresponding with respective usage transactions of said transaction device, and communicate a notification message to said subscriber notification device, said notification message indicating said transaction records.
